# FASCICULE DE BREVET EUROPEEN

(11) **EP 1 186 170 B1**
(45) Date de publication et mention de la délivrance du brevet: **11.12.2002**
(21) Numéro de dépôt: 00936966.1
(22) Date de dépôt: 29.05.2000
(51) Int. Cl.: H04N 7/16, H04N 7/173

(54) **INSTALLATION DE COMMUNICATION POUR UNE RECEPTION COLLECTIVE D'INFORMATIONS**
KOMMUNIKATIONSANLAGE ZUM GEMEINSAMEN EMPFANG VON INFORMATIONEN
COMMUNICATION INSTALLATION FOR COLLECTIVE DATA RECEPTION

(30) Priorité: 02.06.1999 FR 9906958
(43) Date de publication de la demande: 13.03.2002
(73) Titulaire: Thomson multimedia Digital France, 92100 Boulogne Billancourt (FR)
(72) Inventeur: BASSET, Jean-Claude, F-75013 Paris (FR)
(74) Mandataire: Kerber, Thierry
(86) Numéro de dépôt international: FR0001464
(87) Numéro de publication internationale: WO00076214

(56) Documents cités:
- WO-A-94/14284
- WO-A-98/17064
- US-A- 5 592 551
- US-A- 5 682 195

## Description

L'invention concerne une installation de communication, en particulier pour une réception collective d'informations telles que des images de télévision numérique et/ou des données de type multimédia (pages WEB, fichiers, son, données, images vidéo, etc), le cas échéant via INTERNET.

Une installation de ce type comprend une interface d'entrée par laquelle elle reçoit un signal portant des informations du type précité. Ce signal émane d'une source d'informations, par une liaison par câble ou filaire, par voie hertzienne, ou encore par liaison satellite.

En outre, l'interface d'entrée de l'installation reçoit de cette source d'informations des applications logicielles qui permettent la conversion du signal précité, en un signal directement utilisable par un usager sur un équipement tel qu'un écran de télévision, un magnétoscope, ou encore un micro-ordinateur. Pour effectuer cette conversion, il est prévu un dispositif récepteur/décodeur à disposition d'un usager individuel, capable de convertir le signal précité en utilisant ces applications logicielles.

Des installations de communication, connues, comprennent un dispositif récepteur/décodeur par usager et par type de signal à recevoir. Ainsi, un usager individuel doit posséder plusieurs dispositifs récepteurs/décodeurs s'il souhaite utiliser plusieurs signaux issus de sources d'informations distinctes et associés à des applications logicielles différentes. En outre, la connexion de cette pluralité de dispositifs récepteurs/décodeurs à un équipement du type précité s'avère souvent délicate.

Le document WO-9414284 décrit une installation du type précité permettant de distribuer des informations à de multiples utilisateurs possédant des récepteurs/décodeurs (dits "set-top terminals"). Chaque récepteur/décodeur reçoit des signaux d'informations provenant d'une source (tels qu'un programme compressé) et des signaux de contrôle pour générer des modèles de menus. Cependant, ce type d'installation présente des inconvénients, en particulier en terme de polyvalence pour la réception et la gestion de signaux d'informations de natures différentes.

La présente invention vient améliorer la situation.

Elle propose à cet effet une installation de communication, du type comprenant :
- une interface d'entrée propre à recevoir au moins un premier signal émanant d'une première source d'informations, ainsi qu'au moins des premières applications logicielles, et
- au moins un dispositif récepteur/décodeur, à disposition d'un usager individuel, agencé pour utiliser les premières applications logicielles pour procéder à la conversion du premier signal en vue d'une utilisation directe par l'usager,
- un serveur local, relié, d'une part, à l'interface d'entrée et, d'autre part, au dispositif récepteur/décodeur, et capable de transmettre les premières applications logicielles au dispositif récepteur/décodeur de l'usager, pour procéder à la conversion du premier signal.

Selon une définition générale de l'invention,
- l'interface d'entrée est apte à recevoir en outre au moins un second signal émanant d'une seconde source d'informations, ainsi que des secondes applications logicielles,
- le dispositif récepteur/décodeur est agencé en outre pour utiliser les secondes applications logicielles pour procéder à la conversion du second signal en vue d'une utilisation directe par l'usager, et
- le serveur local comprend un module de dialogue avec le dispositif récepteur/décodeur pour transmettre, sélectivement en fonction d'une demande d'un usager, les premières ou les secondes applications logicielles, au dispositif récepteur/décodeur de l'usager, pour procéder à la conversion du premier signal ou du second signal selon la demande de l'usager.

Avantageusement, le serveur local comporte un module harmoniseur relié à l'interface d'entrée et apte à mettre les premier et second signaux sous une forme commune, tandis que le dispositif récepteur/décodeur est agencé pour procéder à la conversion d'un signal harmonisé présentant ladite forme commune.

Dans une réalisation préférée, le module harmoniseur est agencé pour remoduler les premier et second signaux suivant un même type de modulation, tandis que le dispositif récepteur/décodeur comporte un module démultiplexeur avantageusement agencé pour opérer sur des signaux présentant ce type de modulation.

Selon une autre caractéristique avantageuse de l'invention, le dispositif récepteur/décodeur comporte une mémoire pour charger les premières ou secondes applications logicielles, ainsi qu'un module de gestion apte à accéder à ladite mémoire et agencé pour coopérer avec le module démultiplexeur, pour procéder à la conversion du signal harmonisé, en vue d'une utilisation directe.

Selon une autre caractéristique avantageuse de l'invention, l'installation comporte un réseau de connexions pour relier une multiplicité de dispositifs récepteurs/décodeurs au serveur local, tandis que le serveur local comporte une interface de sortie reliée au module de dialogue pour transmettre, sélectivement en fonction des demandes des usagers, les premières ou les secondes applications logicielles aux dispositifs récepteurs/décodeurs correspondants.

Préférentiellement, les dispositifs récepteurs/décodeurs portent chacun un identifiant prédéterminé tandis que le module de dialogue coopère avec un registre des identifiants que comporte le serveur local, pour dialoguer répétitivement avec les dispositifs récepteurs/décodeurs suivant un protocole de type interrogation/réponse.

Le serveur local est, de préférence, agencé pour interroger successivement les dispositifs récepteurs/décodeurs de façon sensiblement cyclique, et recevoir en réponse les demandes des usagers successivement.

En variante ou en combinaison avec cette interrogation en cascade, il peut être prévu une interrogation en rafale. Dans ce cas, le serveur local est agencé pour interroger simultanément les dispositifs récepteurs/décodeurs et recevoir en réponse les demandes des usagers simultanément.

Selon une autre caractéristique avantageuse de l'invention, le serveur local est agencé pour transmettre en outre des applications logicielles permettant un dialogue entre le dispositif récepteur/décodeur et l'une au moins desdites première et seconde sources, suivant un protocole interactif.

Avantageusement, le dispositif récepteur/décodeur est apte à communiquer par une voie de retour avec le serveur local, tandis que le serveur local comporte une liaison de communication avec la première et/ou la seconde source d'informations, pour transmettre au dispositif récepteur/décodeur, des applications logicielles choisies suivant une demande de l'usager.

Dans une forme de réalisation avantageuse de l'installation de communication selon l'invention, le dispositif récepteur/décodeur est apte à transmettre par ladite voie de retour une demande de mise à jour des premières et/ou secondes applications logicielles.

Dans une réalisation particulière, l'un au moins des premier et/ou second signaux à recevoir est, en pratique, un signal embrouillé portant des informations sujettes à péage, tandis que le récepteur/décodeur comporte avantageusement un module désembrouilleur capable de procéder à une conversion des premier et/ou second signaux en des signaux désembrouillés, sous réserve d'obtention de droits d'accès.

Avantageusement, le dispositif récepteur/décodeur comporte un module de gestion de droits d'accès apte à coopérer avec le module désembrouilleur pour activer le désembrouillage du premier et/ou du second signal, tandis que le serveur local est apte à consulter ledit module de gestion de droits d'accès, en vue de contrôler les droits dont dispose le dispositif récepteur/décodeur.

En variante, le dispositif récepteur/décodeur est agencé pour transmettre par ladite voie de retour une demande de droits d'accès, tandis que le serveur local est agencé pour communiquer ladite demande de droits d'accès à la première et/ou la seconde source d'informations, et pour transmettre au dispositif récepteur/décodeur, des applications logicielles permettant le désembrouillage du premier et/ou du second signal, en réponse à ladite demande de droits d'accès.

Ainsi, un même dispositif récepteur/décodeur d'une installation selon l'invention, est capable de convertir sélectivement les premier et second signaux, sur demande d'un usager. A ce titre, la présente invention vise aussi un tel dispositif récepteur/décodeur.

D'autres caractéristiques et avantages de l'invention apparaîtront à l'examen de la description détaillée ci-après, et des dessins annexés sur lesquels :
- la figure 1 représente schématiquement une installation de communication selon l'invention ;
- la figure 2 représente les interactions entre les éléments que comporte un dispositif récepteur/décodeur de la technique antérieure, délimité par des traits pointillés ;
- la figure 3 représente schématiquement l'allure d'un signal S_{R} que diffuse le serveur local dans le réseau R ;
- la figure 4 représente schématiquement les interactions entre les différents éléments de la tête de réseau collectif TRC de l'installation représentée sur la figure 1 ; et
- la figure 5 représente les différentes applications logicielles en mémoire d'un dispositif récepteur/décodeur d'une installation selon l'invention.

La description détaillée ci-après et les dessins annexés contiennent pour l'essentiel des éléments de caractère certain. Ils pourront non seulement servir à mieux faire comprendre la présente invention mais aussi contribuer à sa définition, le cas échéant.

La description détaillée ci-après est donnée essentiellement dans le cadre de la communication d'informations du type images de télévision numérique et/ou données multimédia, à titre d'exemple non limitatif. La communication de ces informations est, dans l'exemple décrit, sujette à péage.

On entend dans ce qui suit par collectivité, un ensemble d'usagers formant un groupe géographiquement localisé, tel que des immeubles collectifs, des résidences pavillonnaires, des hôtels, etc.

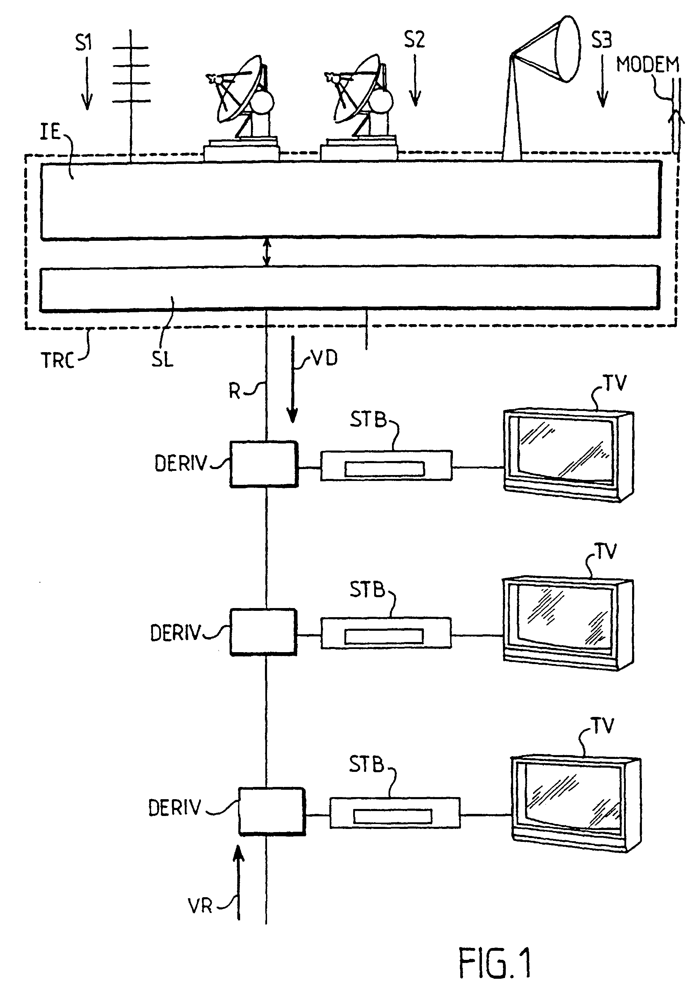

En se référant à la figure 1, une collectivité est équipée d'un réseau muni d'une tête TRC capable de recevoir une pluralité de signaux émanant de sources d'informations distinctes. Dans l'exemple, la tête de réseau collectif TRC reçoit trois signaux S1, S2 et S3 d'images de télévision, transmises par voie hertzienne pour le signal S1, par liaison satellite pour le signal S2 et par liaison filaire ou par câble pour le signal S3.

Ces différents signaux sont de types de modulation différents et, le cas échéant, de codages différents (MPEG, SECAM ou autre).

Par exemple, pour le signal terrestre numérique transmis par voie hertzienne S1, la modulation est de type COFDM (abréviation du terme anglais "CODED ORTHOGONAL FREQUENCY DIVISION MULTIPLEX"). Pour le signal S2 transmis par satellite, sa modulation est de type QPSK (abréviation du terme anglais "QUADRATURE PHASE SHIFT KEYING"). Pour le signal S3 transmis par câble, sa modulation est de type QAM (abréviation du terme anglais "QUADRATURE AMPLITUDE MODULATION"). Pour des liaisons bifilaires, il est fréquent d'utiliser une modulation de type ADSL (abréviation du terme anglais "ASYMETRIC DIGITAL SUBSCRIBER LINE").

Par ailleurs, au moins une partie de ces signaux porte des informations sujettes à péage. De tels signaux sont donc embrouillés et leur conversion en des signaux désembrouillés, en vue d'une utilisation directe par un usager, nécessite des applications logicielles spécifiques.

Dans l'exemple décrit, le signal S2 est issu de la source d'informations "CanalSatellite" (Marque déposée) et l'application logicielle permettant le désembrouillage de ce signal S2 est "MEDIAGUARD" (Marque déposée), tandis que le signal S3 est issu de la source d'informations "TPS" (Marque déposée) et l'application logicielle permettant son désembrouillage est "VIACCESS" (Marque déposée). D'autres applications logicielles telles que "NAGRAVISION", "CONAX", etc, permettent le désembrouillage d'autres signaux diffusés dans certains réseaux européens.

Par ailleurs, à ces différents types de signaux sont associées d'autres applications logicielles permettant la mise en forme des informations qu'ils contiennent, et notamment une interactivité entre l'usager et les sources. Par exemple pour le signal S2, l'application logicielle utilisée est "MEDIAHIGHWAY" (Marque déposée), tandis que pour le signal S3 l'application logicielle utilisée est "OPEN TV" (Marque déposée).

Ainsi, chacun de ces signaux est mis en forme suivant un type de modulation spécifique, et sa conversion utilise une ou plusieurs applications logicielles spécifiques à ce signal.

Il est à noter en outre que le signal S1, reçu par voie hertzienne, peut être de modulation numérique (modulation COFDM précitée) ou encore de modulation analogique (SECAM ou autre).

La tête du réseau collectif TRC comprend une interface d'entrée IE capable de recevoir les trois signaux S1, S2 et S3. De façon habituelle, les signaux transmis par satellite ou par câble (S2 et S3) doivent être décodés et, le cas échéant, désembrouillés pour une utilisation directe d'un usager. Ce décodage/désembrouillage est habituellement effectué par un dispositif récepteur/décodeur STB (appelé plus simplement décodeur dans ce qui suit). Un tel décodeur STB est généralement relié à un équipement à disposition de l'usager, tel qu'un téléviseur TV, un magnétoscope, ou encore un micro-ordinateur dans le cas d'une réception de données multimédia.

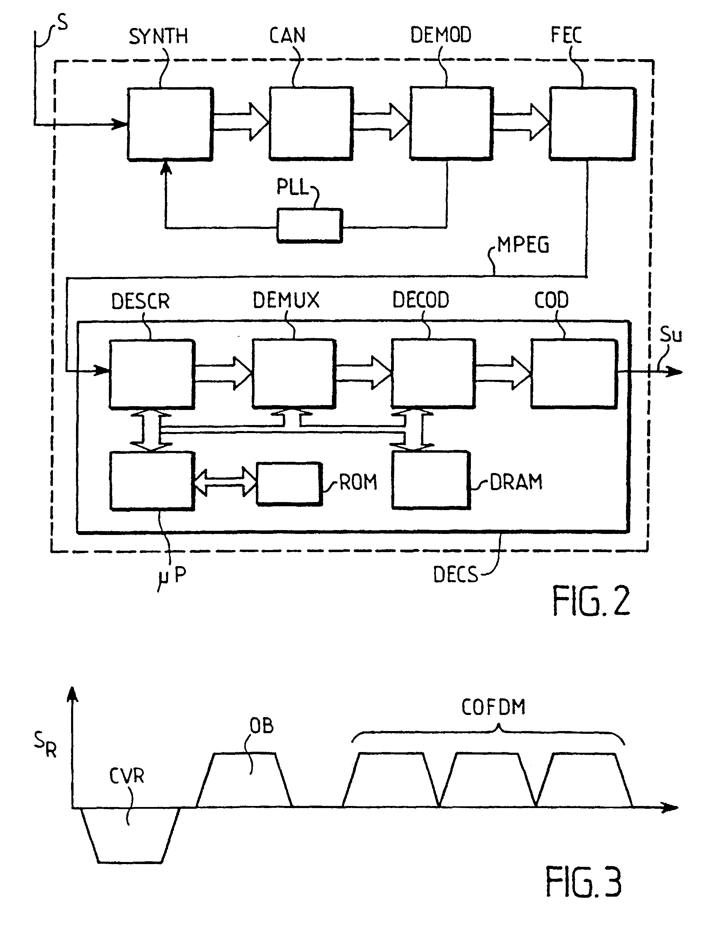

En se référant à la figure 2, un décodeur classique de la technique antérieure comporte, en entrée, un synthoniseur SYNTH, en coopération avec une boucle à verrouillage de phase PLL pour une récupération d'horloge et de porteuse sur le signal reçu S de modulation QPSK (signal S2) ou de modulation QAM (signal S3).

En pratique, le signal S en entrée du décodeur est converti en numérique en CAN, puis démodulé en DEMOD par coopération avec le synthoniseur SYNTH et la boucle PLL. Ce traitement est suivi ensuite d'un ensemble de filtrage et de décodage, par exemple un décodage de VITERBI pour le signal S2, qui achève ainsi un traitement des signaux appelé communément "décodage de canal".

Le signal en sortie de ce bloc de décodage de canal se présente sous la forme d'un flux de paquets MPEG avant d'attaquer un bloc de décodage de source DECS. Dans le cas de signaux embrouillés, le bloc de décodage de source commence par un module désembrouilleur DESCR, généralement piloté par un microprocesseur µP gérant une mémoire dynamique DRAM, qui reçoit d'un lecteur (non représenté) de carte à puce donnant des droits d'accès, une clé permettant le désembrouillage. Ce module désembrouilleur DESCR coopère avec un bloc démultiplexeur DEMUX qui permet la sélection au moyen de filtre adapté des paquets dans le flux MPEG. En pratique, le module démultiplexeur du décodeur permet de filtrer dans le flux MPEG les données d'images non désirées pour sélectionner les données d'images choisies par l'usager. Ce bloc de démultiplexage est suivi d'un module décodeur DECOD (MPEG2 dans l'exemple décrit) et d'un encodeur vidéo/audio COD pour délivrer des signaux sᵤ d'utilisation directe vers un téléviseur, un magnétoscope ou autre.

Il est à noter en particulier que le module désembrouilleur DESCR, le bloc démultiplexeur DEMUX et le décodeur de format MPEG (référencé DECOD), au cours de ce décodage de source, sont pilotés par le microprocesseur µP qui coopère avec la mémoire dynamique DRAM et, le cas échéant, avec une mémoire morte ROM.

Les décodeurs/désembrouilleurs de la technique antérieure comportent en outre une liaison, généralement de type MODEM (non représentée), avec la source d'informations de laquelle émane le signal reçu S, pour télécharger, dans la mémoire vive DRAM, des applications logicielles permettant une interactivité avec la source et, le cas échéant, l'activation du désembrouillage/décodage. Ils comprennent par ailleurs en mémoire morte ROM des applications logicielles résidentes qui permettent des fonctions de base, par exemple un dialogue par MODEM avec la source, les fonctionnalités de désembrouillage, de démultiplexage et de décodage MPEG, etc.

Il apparaît alors que chaque type de décodeur est spécifique au signal à recevoir, tant au niveau des blocs de démodulation (QPSK ou QAM) qu'il comporte, qu'au niveau des applications logicielles utilisées.

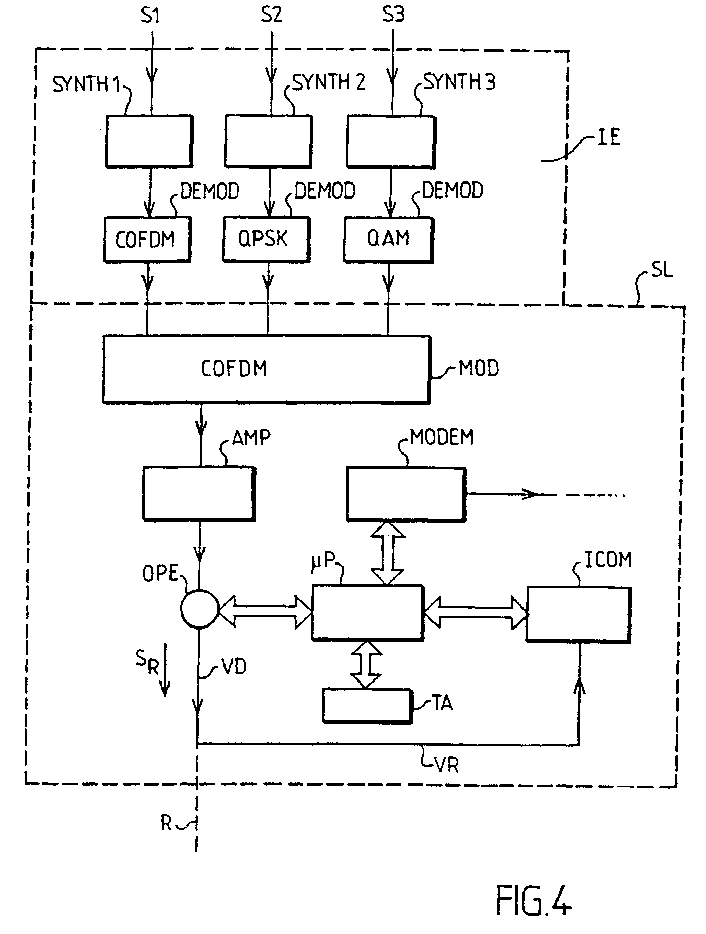

On se réfère alors à la figure 4 pour décrire les interactions entre les éléments que comporte une tête de réseau collectif TRC d'une installation selon l'invention. L'interface d'entrée IE comporte trois voies de décodage de canal, avec un synthoniseur SYNTH1, SYNTH2 et SYNTH3 pour chaque signal S1, S2 et S3, ainsi que des blocs de démodulation DEMOD respectifs (par exemple COFDM pour le signal S1, QPSK pour le signal S2 et QAM pour le signal S3), suivis de blocs de filtrage et de décodage respectifs (non représentés).

Le canal d'entrée des signaux S1, S2 et S3 est, de préférence, en correspondance en fréquence avec le canal de sortie sur le réseau R. Avantageusement, cette correspondance est prise en charge par une application logicielle propre au réseau. Dans une variante simplifiée, cette correspondance peut être effectuée manuellement par un installateur à partir d'un synthoniseur réglable manuellement.

Les flux MPEG résultant de ces décodages de canal attaquent un serveur local SL muni d'un modulateur MOD capable de mettre en forme les flux MPEG des signaux S1, S2 et S3 suivant une modulation commune. Préférentiellement, cette modulation commune est de type COFDM, correspondant à la modulation initiale du signal S1 transmis par voie hertzienne.

De façon générale, cette modulation, correspondant à la modulation des signaux terrestres numériques, présente les avantages suivants :
- il n'est pas nécessaire d'effectuer une remodulation pour les signaux terrestres, les plus courants en télévision numérique ;
- cette modulation offre une bande passante optimisée pour un grand nombre de signaux transmis actuellement par câble;
- elle présente une bonne résistance aux ruptures d'impédances réseau ; et
- elle est compatible avec les modules de réception des téléviseurs numériques actuels.

Les signaux ainsi modulés sont transposés dans une bande de fréquence choisie, typiquement de 8 MHz.

En pratique, les signaux S1, S2 et S3 sont préférentiellement démodulés en DEMOD (figure 4), remodulés et égalisés en MOD suivant une modulation commune (COFDM), puis amplifiés en AMP, au cours du traitement dans la tête de réseau collectif TRC. Ils sont ensuite envoyés dans le réseau R vers les décodeurs/désembrouilleurs STB des usagers, sous forme de paquets de format MPEG, par une interface de sortie du serveur local SL comprenant un module de mise en forme OPE. Il est à noter que ce flux de paquets MPEG n'est pas modifié par les opérations précédentes de démodulation et de remodulation.

En se référant à la figure 3, le signal S_{R} qu'envoie le serveur local sur le réseau R se présente donc sous la forme d'un flux de paquets MPEG de modulation COFDM précédé d'un canal hors bande OB pour la voie descendante VD du réseau (du serveur SL aux décodeurs STB), ainsi que d'un second canal hors bande CVR permettant la gestion d'une voie de retour VR (des décodeurs STB au serveur SL), remontante.

Ainsi, la tête de réseau collectif TRC :
- reçoit les signaux S1, S2 et S3 par son interface d'entrée IE ;
- démodule respectivement ces signaux par décodage desdits signaux S1, S2 et S3 en conservant les modulations MPEG de transport de ces signaux ;
- remodule suivant un type de modulation commun (COFDM dans l'exemple décrit) ces signaux ;
- et les envoie sous la forme d'un flux de paquets MPEG dans le réseau R, à destination des récepteurs/décodeurs et/ou désembrouilleurs des usagers.

Les décodeurs STB reliés au réseau R sont banalisés et comportent chacun un module de démultiplexage commun destiné à opérer sur des paquets MPEG communs de modulation de type COFDM. Chaque décodeur STB de l'installation selon l'invention ne comporte, en définitive, qu'un bloc DECS de décodage de source (partie encadrée en traits pleins de la figure 2), le décodage de canal étant effectué en amont du réseau R, au niveau de la tête de réseau collectif TRC.

Cependant, les applications logicielles qu'utilise le microprocesseur d'un décodeur STB, doivent être transmises à travers le réseau R suivant les demandes des usagers (conversion en signaux audio et vidéo, désembrouillage, interactivité avec les sources d'informations, etc).

Le serveur local de l'installation selon l'invention comporte un module de dialogue ICOM permettant une interactivité entre la tête de réseau collectif TRC et les différents décodeurs STB du réseau R. Ce module de dialogue interprète des demandes des usagers transmises par les décodeurs STB à travers la voie de retour VR, pour envoyer en réponse les applications logicielles demandées.

Le canal CVR du signal S_{R} est réservé à l'interprétation des demandes sur la voie de retour VR, tandis que le canal hors bande OB du signal S_{R} est réservé à l'interrogation des décodeurs STB, pour la transmission des applications logicielles. Préférentiellement, les canaux hors bande CVR et OB véhiculent des paquets modulés suivant une modulation de type QPSK à 1 MHz de bande. Ainsi, le dialogue du serveur local avec les décodeurs STB permet par exemple une adaptation des configurations logicielles respectives des décodeurs suivant les différents abonnements des usagers, dans le cadre d'une diffusion d'images télévisuelles sujette à péage. Cette adaptation des applications logicielles s'effectue selon le choix d'une source d'informations (ou opérateur) par un usager. Le dialogue entre le serveur local et les décodeurs permet en outre à l'usager d'utiliser les services interactifs que proposent les différents opérateurs.

Dans une réalisation préférée, le mode de dialogue est de type "interrogation/réponse". Le serveur local SL comporte une mémoire comprenant une table d'identifiants TA des décodeurs STB des usagers. Pour chaque identifiant, le serveur émet un "jeton" par le canal hors bande OB à chaque décodeur d'un usager, les uns après les autres. Le décodeur disposant du jeton réémet, par le canal de la voie de retour CVR, ce jeton qui comporte, le cas échéant, une nouvelle demande. Ce type d'interrogation, en cascade, permet avantageusement :
- de contrôler le bon fonctionnement du réseau R ; et
- de transmettre rapidement une demande de téléchargement d'application logicielle demandée.

Dans l'exemple, un cycle s'effectue à partir d'une interrogation toutes les 1 milliseconde. Ainsi, pour un réseau collectif comportant une centaine de décodeurs STB, la durée du cycle est de 100 millisecondes, durée compatible avec un débit standard de type ITU-J112, de bande passante de 1 MHz avec un débit de 1,544 Mb/s.

En variante, il peut être prévu un mode d'interrogation/réponse en rafale (ou paquet). Dans cette forme de réalisation, le serveur SL télécharge, suite à une demande dans le réseau, un ensemble de données constituant un téléchargement d'une application logicielle. Ce protocole en rafale permet avantageusement une mise en relation directe du serveur avec un ou plusieurs décodeurs STB. Dans ce mode, il peut être prévu de charger, en pratique, 1 Moctet en 8 secondes.

Bien entendu, ces deux modes en cascade et en rafale peuvent coexister dans une même version de l'installation selon l'invention. Par exemple, pour une surveillance permanente des demandes des usagers du réseau, il peut être prévu un mode d'interrogation/réponse en cascade, tandis que pour le téléchargement de l'application logiciel demandée, il peut être prévu, en outre, une communication en rafale.

Le module de dialogue du serveur local SL comporte donc une interface pour la gestion de la voie de retour VR qui, préférentiellement, est une interface série numérique (non représentée) pilotée, par exemple, par un microprocesseur µP. Le module de dialogue ICOM coopère avec la table d'identifiants TA précitée, par l'intermédiaire du microprocesseur µP, pour dialoguer avec les décodeurs STB par des messages contenant un identificateur du décodeur STB dans le réseau, ainsi que des données à émettre (applications logicielles, données multimédia, etc).

La table des identifiants TA comporte, en pratique, des adresses numériques des usagers sur le réseau collectif, ainsi que des références des décodeurs STB. Cette table permet avantageusement d'estimer une topologie du réseau, en particulier de connaître les logiciels mis en place dans les différents décodeurs. La tête de réseau collectif TRC comporte une liaison MODEM lui permettant une communication avec les différentes sources d'information desquelles émanent les signaux S1, S2 et S3 (ou opérateurs) et la table des identifiants permet ainsi aux opérateurs de contrôler les différentes applications logicielles délivrées aux décodeurs STB du réseau R.

Par ailleurs, cette liaison MODEM permet en outre de contrôler à distance le bon fonctionnement de la tête de réseau collectif. Ainsi, si la réception et/ou le décodage de canal de l'un des signaux S1, S2 et S3 est défectueuse, une alarme est délivrée vers l'opérateur correspondant, le cas échéant.

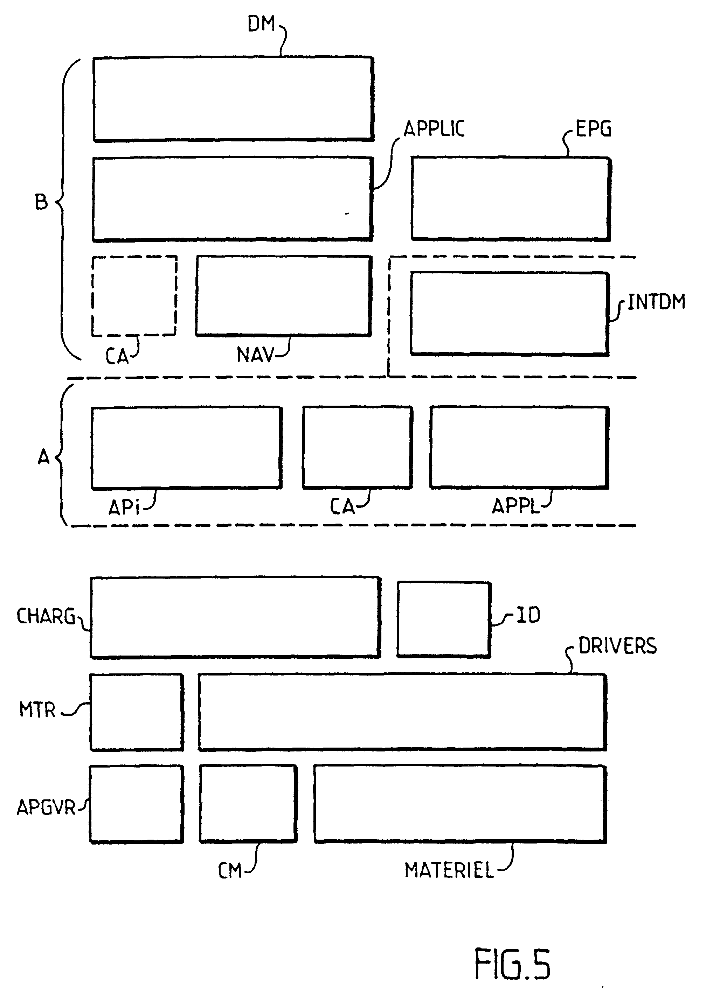

On se réfère maintenant à la figure 5 pour décrire les applications logicielles résidentes et téléchargées dans un dispositif récepteur/décodeur STB d'une installation selon l'invention.

En mémoire morte du décodeur sont chargées une pluralité d'applications logicielles résidentes :
- une interface de chargement CHARG de données diffusées dans le réseau, notamment pour l'initialisation du décodeur;
- un moniteur temps réel MTR qui assure la gestion en temps réel du microprocesseur, ainsi que les ressources système (mémoire, interruption, file d'attente);
- une pluralité de logiciels de contrôle DRIVERS associés à une application logicielle MATERIEL pour la configuration des applications logicielles associées aux matériels utilisés, et qui assurent la gestion de tous les circuits matériels et des fonctionnalités du décodeur (désembrouillage, décodage, encodage vidéo, incrustations dans les images diffusées, etc) ;
- une interface de carte à mémoire CM, dans le cas où les décodeurs STB sont équipés d'un lecteur de cartes à puce fournissant une clé de désembrouillage pour l'utilisation d'images sujettes à péage ;
- cette interface de cartes à mémoire coopère avec un module d'identification ID du décodeur (adresse numérique de l'usager dans la table des identifiants précitée) ; et
- une application logicielle APGVR de gestion de la voie de retour qui assure le dialogue du décodeur avec le serveur local.

Il est à rappeler ici que la gestion de la voie de retour permet un dialogue entre le serveur local et les décodeurs STB et, en particulier, de télécharger des applications logicielles (couches supérieures de la figure 5).

Ces applications logicielles téléchargées peuvent se ranger selon deux catégories (ou couches A et B), suivant qu'elles émanent directement du serveur local (couche A) ou qu'elles émanent des sources via le serveur (couche B).

Dans ce qui suit, il est décrit à titre d'exemple non limitatif des décodeurs STB capables de désembrouiller des signaux portant des informations sujettes à péage (images de télévision numériques et/ou données multimédia).

chaque décodeur comporte un dispositif de contrôle d'accès comprenant typiquement un lecteur de cartes à puce, en combinaison avec un microprocesseur relié au module de désembrouillage. Un changement d'opérateur nécessite alors un changement d'application logicielle pour le désembrouillage.

Dans une première forme de réalisation d'un décodeur STB d'une installation selon l'invention, les moyens de contrôle d'accès et de gestion des clés de désembrouillage sont chargés dans les applications logicielles résidentes. Dans ce cas, le décodeur STB assure lui-même la gestion des contrôles d'accès, sans que le serveur local intervienne. En pratique, l'interface de carte à puce CM coopère avec le module d'identification ID (associé à l'application logicielle relative à l'identification de l'usager). Le module de contrôle d'accès CA, téléchargeable sur le réseau et qui, à ce titre, apparaît dans la couche A de la figure 5, peut être transmis vers le serveur local.

Dans une forme de réalisation différente, les applications logicielles associées au droit d'accès sont contenues dans les applications logicielles générales que propose l'opérateur via le serveur local. Dans cette configuration, le dispositif récepteur/décodeur STB permet à l'usager d'utiliser des applications logicielles de navigation pour une interactivité avec les opérateurs, ces applications logicielles de navigation étant accompagnées des applications logicielles relatives au droit d'accès. En revanche, dans cette forme de réalisation, le décodeur STB ne permet pas de gérer les contrôles d'accès en réception simple, dans la mesure où la gestion des droits d'accès se fait par interactivité avec l'opérateur. A ce titre, le module de contrôle d'accès CA est représenté dans la couche B de la figure 5, en traits pointillés.

Parmi les applications logicielles téléchargeables, la couche de base A permet de configurer le décodeur, pour le désembrouillage, le démulitiplexage, le décodage, etc, ainsi que pour l'interprétation des applications logicielles émanant des opérateurs, à partir d'une interface de type API assurant la transmission entre les couches logicielles résidantes et les interfaces propriétaires (OPEN TV ou MEDIAHIGHWAY).

La couche A comprend donc :
- une application logicielle API liée à l'interface de chargement CHARG pour la mise en place des applications logicielles téléchargées, émanant des opérateurs ou standardisées (JAVA); et
- des applicatifs APPL de décodage/désembrouillage permettant de piloter le décodage de source qu'effectue le décodeur STB.

Ces applications logicielles de base (ou logiciel système) permet :
- l'utilisation directe de signaux non embrouillés (par exemple des images de télévision numérique qui ne sont pas sujettes à péage) ;
- de télécharger les applications logicielles de navigation NAV issues des différents opérateurs ; et
- de télécharger des applications logicielles INTDM, par exemple un interpréteur JAVA, permettant de recevoir des données multimédia DM et d'exécuter de telles applications, indépendantes des applications de navigation NAV issues des opérateurs.

Comme on l'a vu précédemment, dans la seconde forme de réalisation du décodeur précité selon laquelle le contrôle d'accès pour le désembrouillage est effectué via le serveur local, le module de contrôle d'accès CA (représenté par des traits pointillés sur la figure 5) est téléchargé dans la couche B, notamment avec les applications logicielles de navigation NAV.

Dans la couche B représentée sur la figure 5, il est prévu des applications logicielles APPLIC émanant des opérateurs, par exemple "OPEN TV" pour TPS et "MEDIAHIGHWAY" pour CanalSatellite, permettant d'activer le désembrouillage des signaux S2 et S3.

Par ailleurs, il peut être prévu, avec le logiciel navigateur, un module de guidage EPG dans le cadre d'une interactivité de l'usager avec l'opérateur, ainsi que des données multimédia DM transmises au cours d'une telle interactivité. Dans une réalisation préférée, les applications logicielles INTDM (interpréteur de données multimédia), une fois téléchargées, résident en mémoire morte du décodeur.

Ainsi, selon l'un des avantages que procure la présente invention, dans le signal S_{R} diffusé dans le réseau R, sont multiplexés les différents signaux S1, S2 et S3 et codés suivant un type de modulation préféré (COFDM dans l'exemple décrit). Par ailleurs, dans le signal S_{R}, un canal hors bande OB (de modulation QPSK, dans l'exemple décrit) porte un jeton d'interrogation, tandis que le canal hors bande associé à la voie de retour CVR, porte un jeton de retour, associé, le cas échéant, à une demande nouvelle d'un usager (applications logicielles nouvelles demandées). A partir du logiciel système téléchargé dans la couche A, le décodeur est apte à démultiplexer le signal S_{R} pour sélectionner les données d'images souhaitées par l'usager. Pour le décodage/désembrouillage de données d'images nécessitant des applications logicielles spécifiques (MEDIAHIGHWAY, OPEN TV), ces applications logicielles sont sélectivement transmises au décodeur STB de l'usager, suivant sa demande (couche B d'applications logicielles précitée).

Un autre avantage que procure la présente invention est qu'un unique dispositif récepteur/décodeur STB peut être utilisé pour décoder les différents signaux, associés à des applications logicielles distinctes, ce qui simplifie les matériels à disposition des usagers (connexion unique d'un téléviseur, d'un magnétoscope ou autre, au décodeur STB).

Un autre avantage que procure la présente invention est le contrôle que peut effectuer chaque opérateur, à travers le serveur local SL, notamment des applications logicielles dont dispose chaque décodeur STB, ainsi que les droits d'accès associés.

Bien entendu, la présente invention ne se limite pas à la forme de réalisation décrite ci-avant à titre d'exemple. Elle s'étend à d'autres variantes.

On comprendra ainsi que l'installation selon l'invention ne se limite pas à une application de diffusion d'images numériques sujettes à péage. Elle peut concerner en outre la diffusion d'images non embrouillées, accompagnées de données multimédia issues de sources distinctes.

Par ailleurs, les informations émanant des différentes sources décrites ci-avant ne sont pas nécessairement relatives à des données d'images de télévision. Ces informations peuvent, en variante, être des données multimédia émanant de sources différentes et de codages différents.

Les différents opérateurs cités précédemment (CanalSatellite, TPS, etc) sont décrits ci-avant à titre d'exemples. Par ailleurs, la présente invention ne se limite pas aux types de modulations décrites ci-avant. Par exemple, la modulation COFDM des signaux d'images diffusées sur le réseau, décrite ci-avant, bien qu'avantageuse, est susceptible de variantes, notamment le codage de la voie de retour qui peut utiliser des protocoles DVB standard (QAM, QPSK) ou des protocoles SFDMA (Synchronous Frequency Division Multiple Access) ou FCDMA (Frenquency Coded Division Multiple Access).

## Revendications

1. Installation de communication, en particulier pour la réception collective d'informations, du type comprenant :
- une interface d'entrée (IE) propre à recevoir au moins un premier signal (S2) émanant d'une première source d'informations, ainsi qu'au moins des premières applications logicielles (NAV, APPL),
- au moins un dispositif récepteur/décodeur (STB), à disposition d'un usager individuel, agencé pour utiliser les premières applications logicielles (NAV, APPL) pour procéder à la conversion du premier signal (S2) en vue d'une utilisation directe par l'usager, et
- un serveur local (SL), relié, d'une part, à l'interface d'entrée (IE) et, d'autre part, au dispositif récepteur/décodeur (STB), et capable de transmettre les premières applications logicielles au dispositif récepteur/décodeur de l'usager pour procéder à la conversion du premier signal,
**caractérisée en ce que** l'interface d'entrés (IE) est apte à recevoir en outre au moins un second signal (S3) émanant d'une seconde source d'informations, ainsi que des secondes applications logicielles,
**en ce que** le dispositif récepteur/décodeur (STB) est agencé en outre pour utiliser les secondes applications logicielles pour procéder à la conversion du second signal (S3) en vue d'une utilisation directe dudit second signal,
et **en ce que** le serveur local (SL) comprend un module de dialogue (ICOM) avec le dispositif récepteur/décodeur (STB) pour transmettre, sélectivement en fonction d'une demande d'un usager, les premières ou les secondes applications logicielles au dispositif récepteur/décodeur de l'usager, pour procéder à la conversion du premier signal ou du second signal selon la demande de l'usager.

2. Installation selon la revendication 1, **caractérisée en ce que** le serveur local (SL) comporte un module harmoniseur (MOD,AMP) relié à l'interface d'entrée (IE) et apte à mettre les premier et second signaux (S2,S3) sous une forme commune, tandis que le dispositif récepteur/décodeur est agencé pour procéder à la conversion d'un signal harmonisé (S_{R}) qui présente ladite forme commune.

3. Installation selon la revendication 2, **caractérisée en ce que** le module harmoniseur (MOD) est agencé pour remoduler les premier et second signaux (S2,S3) suivant un même type de modulation (COFDM), tandis que le dispositif récepteur/décodeur (STB) comporte un module démultiplexeur (DEMUX) agencé pour opérer sur des signaux (S_{R}) présentant ce type de modulation (COFDM).

4. Installation selon la revendication 3, **caractérisée en ce que** le dispositif récepteur/décodeur (STB) comporte une mémoire (DRAM,ROM) pour charger les premières ou secondes applications logicielles (NAV,APPL), ainsi qu'un module de gestion (µP) apte à accéder à ladite mémoire et agencé pour coopérer avec le module démultiplexeur (DEMUX), pour procéder à la conversion dudit signal harmonisé (S_{R}), en vue d'une utilisation directe.

5. Installation selon l'une des revendications précédentes, **caractérisée en ce que** l'installation comporte un réseau (R) de connexions pour relier une multiplicité de dispositifs récepteurs/décodeurs (STB) au serveur local (SL), tandis que le serveur local (SL) comporte une interface de sortie (OPE) reliée au module de dialogue (ICOM) pour transmettre, sélectivement en fonction des demandes des usagers, les premières ou secondes applications logicielles aux dispositifs récepteurs/décodeurs (STB) correspondants.

6. Installation selon la revendication 5, **caractérisée en ce que** les dispositifs récepteurs/décodeurs (STB) portent chacun un identifiant prédéterminé (ID) et **en ce que** le serveur local (SL) comporte un registre des identifiants (TA), tandis que le module de dialogue (ICOM) est apte à coopérer avec le registre des identifiants (TA) pour dialoguer répétitivement avec les dispositifs récepteurs/décodeurs (STB) suivant un protocole de type interrogation/réponse.

7. Installation selon la revendication 6, **caractérisée en ce que** le serveur local (SL) est agencé pour interroger successivement les dispositifs récepteurs/décodeurs (STB) de façon sensiblement cyclique, et recevoir en réponse (VR) les demandes des usagers successivement.

8. Installation selon l'une des revendications 6 et 7, **caractérisée en ce que** le serveur local (SL) est agencé pour interroger simultanément les dispositifs récepteurs/décodeurs et recevoir en réponse (VR) les demandes des usagers simultanément.

9. Installation selon l'une des revendications précédentes, **caractérisée en ce que** le serveur local (SL) est agencé pour transmettre en outre des applications logicielles (EPG, DM, INTDM) permettant un dialogue entre le dispositif récepteur/décodeur (STB) et l'une au moins desdites première et seconde sources, suivant un protocole interactif.

10. Installation selon l'une des revendications précédentes, **caractérisée en ce que** le dispositif récepteur/décodeur (STB) est apte à communiquer par une voie de retour (VR) avec le serveur local (SL), tandis que le serveur local (SL) comporte une liaison de communication (MODEM) avec la première et/ou la seconde source d'informations, pour transmettre au dispositif récepteur/décodeur (STB), des applications logicielles choisies suivant une demande de l'usager.

11. Installation selon la revendication 10, **caractérisée en ce que** le dispositif récepteur/décodeur (STB) est apte à transmettre par ladite voie de retour (VR) une demande de mise à jour des premières et/ou secondes applications logicielles.

12. Installation selon l'une des revendications précédentes, **caractérisée en ce que** les premier et/ou second signaux portent des informations d'images télévisuelles (S2,S3) et/ou de type multimédia (DM).

13. Installation selon la revendication 12, **caractérisée en ce que** les premier et/ou second signaux (S2,S3) sont des signaux embrouillés portant des informations sujettes à péage, tandis que le récepteur/décodeur (STB) comporte un module désembrouilleur (DESCR) capable de procéder à une conversion des premier et/ou second signaux en des signaux désembrouillés, sous réserve d'obtention de droits d'accès.

14. Installation selon la revendication 13, **caractérisée en ce que** le dispositif récepteur/décodeur (STB) comporte un module de gestion de droits d'accès (CA) apte à coopérer avec le module désembrouilleur (DESCR) pour activer le désembrouillage du premier et/ou du second signal.

15. Installation selon la revendication 14, **caractérisée en ce que** le serveur local (SL) est apte à consulter ledit module de gestion de droits d'accès (CA), en vue de contrôler les droits dont dispose le dispositif récepteur/décodeur (STB).

16. Installation selon la revendication 13, **caractérisée en ce que** le dispositif récepteur/décodeur (STB) est agencé pour émettre vers le serveur local (SL) une demande de droits d'accès, tandis que le serveur local (SL) est agencé pour communiquer ladite demande de droits d'accès à la première et/ou la seconde source d'informations, et pour transmettre au dispositif récepteur/décodeur (STB), des applications logicielles (APPL) permettant le désembrouillage du premier et/ou du second signal, en réponse à ladite demande de droits d'accès.

17. Dispositif récepteur/décodeur d'une installation selon l'une des revendications précédentes.

## Claims

1. Communication installation, in particular for the communal reception of information, of the type comprising:
- an input interface (IE) suitable for receiving at least one first signal (S2) emanating from a first information source, as well as at least first software applications (NAV, APPL),
- at least one receiver/decoder device (STB), available to an individual user, devised so as to use the first software applications (NAV, APPL) to undertake the conversion of the first signal (S2) with a view to direct use by the user, and
- a local server (SL), linked, on the one hand, to the input interface (IE) and, on the other hand, to the receiver/decoder device (STB), and capable of transmitting the first software applications to the receiver/decoder device of the user so as to undertake the conversion of the first signal,
**characterized in that** the input interface(IE) is able moreover to receive at least one second signal (S3) emanating from a second information source, as well as second software applications,
**in that** the receiver/decoder device (STB) is devised moreover to use the second software applications to undertake the conversion of the second signal (S3) with a view to direct use of said second signal,
and **in that** the local server (SL) comprises a dialogue module (ICOM) for talking to the receiver/decoder device (STB) so as to transmit, selectively as a function of a request from a user, the first or the second software applications to the receiver/decoder device of the user, so as to undertake the conversion of the first signal or of the second signal in accordance with the request from the user.

2. Installation according to Claim 1, **characterized in that** the local server (SL) comprises a harmonizer module (MOD, AMP) linked to the input interface (IE) and able to put the first and second signals (S2, S3) into a common form, while the receiver/decoder device is devised so as to undertake the conversion of a harmonized signal (S_{R}) which exhibits said common form.

3. Installation according to Claim 2, **characterized in that** the harmonizer module (MOD) is devised so as to remodulate the first and second signals (S2, S3) according to one and the same type of modulation (COFDM), while the receiver/decoder device (STB) comprises a demultiplexer module (DEMUX) devised so as to operate on signals (S_{R}) exhibiting this type of modulation (COFDM).

4. Installation according to Claim 3, **characterized in that** the receiver/decoder device (STB) comprises a memory (DRAM, ROM) for loading the first or second software applications (NAV, APPL), as well as a management module (µP) able to access said memory and devised so as to cooperate with the demultiplexer module (DEMUX), so as to undertake conversion of said harmonized signal (SR) with a view to direct use.

5. Installation according to any one of the preceding claims, **characterized in that** the installation comprises a network (R) of connections for linking a multiplicity of receiver/decoder devices (STB) to the local server (SL), while the local server (SL) comprises an output interface (OPE) linked to the dialogue module (ICOM) so as to transmit, selectively as a function of the requests from the users, the first or second software applications to the corresponding receiver/decoder devices (STB).

6. Installation according to Claim 5, **characterized in that** the receiver/decoder devices (STB) each carry a predetermined identifier (ID) and **in that** the local server (SL) comprises a registry of indentifiers (TA), while the dialogue module (ICOM) is able to cooperate with the registry of identifiers (TA) so as to talk repetitively to the receiver/decoder devices (STB) according to a question/answer type protocol.

7. Installation according to Claim 6, **characterized in that** the local server (SL) is devised so as to successively question the receiver/decoder devices (STB) in a substantially cyclic manner, and to receive in answer (VR) the requests from the users successively.

8. Installation according to either of Claims 6 and 7, **characterized in that** the local server (SL) is devised so as to simultaneously question the receiver/decoder devices and receive in answer (VR) the requests from the users simultaneously.

9. Installation according to any one of the preceding claims, **characterized in that** the local server (SL) is devised so as furthermore to transmit software applications (EPG, DM, INTDM) allowing a dialogue between the receiver/decoder device (STB) and one at least of said first and second sources, according to an interactive protocol.

10. Installation according to one of the preceding claims, **characterized in that** the receiver/decoder device (STB) is able to communicate via a return path (VR) with the local server (SL), while the local server (SL) comprises a communication link (MODEM) with the first and/or the second information source, so as to transmit to the receiver/decoder device (STB), software applications chosen according to a request from the user.

11. Installation according to Claim 10, **characterized in that** the receiver/decoder device (STB) is able to transmit via said return path (VR) a request to update the first and/or second software applications.

12. Installation according to one of the preceding claims, **characterized in that** the first and/or second signals carry information regarding televisual images (S2, S3) and/or of multimedia type (DM).

13. Installation according to Claim 12, **characterized in that** the first and/or second signals (S2, S3) are scrambled signals carrying information subject to paying, while the receiver/decoder (STB) comprises a descrambler module (DESCR) capable of undertaking a conversion of the first and/or second signals into descrambled signals, with the proviso of obtaining access rights.

14. Installation according to Claim 13, **characterized in that** the receiver/decoder device (STB) comprises a module for managing access rights (CA) able to cooperate with the scrambler module (DESCR) so as to activate the descrambling of the first and/or of the second signal.

15. Installation according to Claim 14, **characterized in that** the local server (SL) is able to consult said module for managing access rights (CA), with a view to controlling the rights to which the receiver/decoder device (STB) has access.

16. Installation according to Claim 13, **characterized in that** the receiver/decoder device (STB) is devised so as to transmit to the local server (SL) a request for access rights, while the local server (SL) is devised so as to communicate said request for access rights to the first and/or second information source, and so as to send the receiver/decoder device (STB), software applications (APPL) allowing the descrambling of the first and/or the second signal, in answer to said request for access rights.

17. Receiver/decoder device of an installation according to one of the preceding claims.

## Patentansprüche

1. Kommunikationsanlage, insbesondere für den gemeinsamen Empfang von Informationen, mit:
- einer Eingangsschnittstelle (IE) zum Empfang wenigstens eines ersten Signals (S2) von einer ersten Informationsquelle und wenigstens ersten Software-Anwendungen (NAV, APPL),
- wenigstens einer Empfänger/Dekoder-Einheit (STB) zur Verfügung durch einen einzelnen Benutzer zur Anwendung der ersten Software-Anwendungen (NAV, APPL) zur Durchführung der Umsetzung des ersten Signals (S2) im Hinblick auf eine direkte Anwendung durch den Benutzer und
- einem örtlichen Server (SL), der einerseits mit der Eingangsschnittstelle (IE) und andererseits mit der Empfänger/Dekoder-Einheit (STB) verbunden und in der Lage ist, die ersten Software-Anwendungen zu der Empfänger/Dekoder-Einheit des Benutzers zu übertragen, um die Umsetzung des ersten Signals vorzunehmen,
**dadurch gekennzeichnet, dass**
- die Eingangsschnittstelle (IE) in der Lage ist, außerdem wenigstens ein zweites Signal (S3) von einer zweiten Informationsquelle sowie zweite Software-Anwendungen zu empfangen.
- die Empfänger/Dekoder-Einheit (STB) außerdem dafür vorgesehen ist, zweite Software-Anwendungen zu benutzen, um die Umsetzung des zweiten Signals (S3) im Hinblick auf eine direkte Anwendung des zweiten Signals vorzunehmen,
- und der örtliche Server (SL) ein Modul für einen Dialog (ICOM) mit der Empfänger/Dekoder-Einheit (STB) enthält, um wahlweise abhängig von einem Benutzerbefehl die ersten oder die zweiten Software-Anwendungen zu der Empfänger/Dekoder-Einheit das Benutzers zu übertragen, um die Umsetzung des ersten Signals oder des zweiten Signals entsprechend der Anforderung des Benutzers vorzunehmen.

2. Anlage nach Anspruch 1, **dadurch gekennzeichnet, dass** der örtliche Server (SL) ein Harmonisierungsmodul (MOD, AMP) enthält, das mit der Eingangs-Schnittstelle (IE) verbunden und dafür geeignet ist, das erste und das zweite Signal (S2, S3) in eine gemeinsame Form zu bringen, während die Empfänger/Dekoder-Einheit dafür vorgesehen ist, die Umsetzung eines harmonisierten Signals (S_{R}) vorzunehmen, das diese gemeinsame Form aufweist.

3. Anlage nach Anspruch 2, **dadurch gekennzeichnet, dass** das Harmonisierungsmodul (MOD) dafür vorgesehen ist, das erste und das zweite Signal (S2, S3) nach demselben Modulationstyp (COFDM) neuzumodulieren, während die Empfänger/Dekoder-Einheit (STB) ein Demultiplexer-Modul (DEMUX) enthält, das dafür vorgesehen ist, auf Signalen (S_{R}) zu arbeiten, die diesen Modulationstyp (COFDM) aufweisen.

4. Anlage nach Anspruch 3, **dadurch gekennzeichnet, dass** die Empfänger/Dekoder-Einheit (STB) einen Speicher (DRAM, ROM) zum Laden der ersten und der zweiten Software-Anwendung (NAV, APPL) sowie ein Verwaltungsmodul (µP) aufweist, das für den Zugriff zu dem Speicher geeignet und dafür vorgesehen ist, mit dem Demultiplexer-Modul (DEMUX) zusammenzuarbeiten, um die Umsetzung des harmonisierten Signals (S_{R}) im Hinblick auf eine direkte Anwendung vorzunehmen.

5. Anlage nach einem der vorangehenden Ansprüche, **dadurch gekennzeichnet, dass** die Anlage ein Netz (R) von Verbindungen enthält, um mehrere Empfänger/Dekoder-Einheiten (STB) mit dem örtlichen Server (SL) zu verbinden, während der örtliche Server (SL) eine Ausgangsschnittstelle (OPE) aufweist, die mit dem Dialog-Modul (ICOM) verbunden ist, um wahlweise in Abhängigkeit von den Benutzerbefehlen die erste oder die zweite Software-Anwendung zu den entsprechenden Empfänger-Dekoder-Einheiten (STB) zu übertragen.

6. Anlage nach Anspruch 5, **dadurch gekennzeichnet, dass** die Empfänger/Dekoder-Einheiten (STB) jede einen vorbestimmten Identifizierer (ID) tragen und dass der örtliche Server (SL) ein Register von Identifizierern (TA) enthält, während das Dialog-Modul (ICON) in der Lage ist, mit dem Register der Identifizierer (TA) zusammenzuarbeiten, um wiederholt entsprechend einem Protokoll vom Typ Frage/Antwort mit den Empfänger/Dekoder-Einheiten zu sprechen.

7. Anlage nach Anspruch 6, **dadurch gekennzeichnet, dass** der örtliche Server (SL) dafür vorgesehen ist, aufeinanderfolgend die Empfänger/Dekoder-Einheiten (STB) in einer im wesentlichen zyklischen Weise zu fragen und als Antwort (VR) die Anforderungen von den Benutzern nacheinander zu empfangen.

8. Anlage nach einem der Ansprüche 6 und 7, **dadurch gekennzeichnet, dass** der örtliche Server (SL) dafür vorgesehen ist, gleichzeitig die Empfänger/Dekoder-Einheiten zu fragen und als Antwort (VR) die Anforderungen der Benutzer zu empfangen.

9. Anlage nach einem der vorangehenden Ansprüche, **dadurch gekennzeichnet, dass** der örtliche Server (SL) dafür vorgesehen ist, außerdem Software-Anwendungen (EPG, DM; INTDM) zu übertragen und einen Dialog zwischen der Empfänger/Dekoder-Einheit (STB) und wenigstens einer der ersten und der zweiten Quelle gemäß einem interaktiven Protokoll zu ermöglichen.

10. Anlage nach einem der vorangehenden Ansprüche, **dadurch gekennzeichnet, dass** die Empfänger/Dekoder-Einheit (STB) in der Lage ist, über einen Rückweg (VR) mit dem örtlichen Server (SL) zu kommunizieren, während der örtliche Server (SL) eine Kommunikationsstrecke (Modem) mit der ersten und/oder der zweiten Informationsquelle enthält, um zu der Empfänger/Dekoder-Einheit (STB) Software-Anwendungen zu übertragen, die entsprechend einer Anforderung des Benutzers gewählt sind.

11. Anlage nach Anspruch 10, **dadurch gekennzeichnet, dass** die Empfänger/Dekoder-Einheit (STB) in der Lage ist, über den Rückweg (VR) eine Anforderung für die Aktualisierung der ersten undloder zweiten Software-Anwendung zu übertragen.

12. Anlage nach einem der vorangehenden Ansprüche, **dadurch gekennzeichnet, dass** das erste und/oder zweite Signal Informationen für Fernsehbilder (S2, S3) und/oder von Multimedia-Typ (DM) trägt.

13. Anlage nach Anspruch 12, **dadurch gekennzeichnet, dass** das erste und/oder das zweite Signal (S2, S3) verschachtelte Signale sind, die Informationen für ein Gebührenfernsehen tragen, während der Empfänger/Dekoder (STB) ein Entwürfelungs-Modul (DESCR) enthält, das in der Lage ist, eine Umsetzung des ersten und/oder zweiten Signals in entwürfelte Signale vorzunehmen, unter der Bedingung, Zugriffsrechte zu erhalten.

14. Anlage nach Anspruch 13, **dadurch gekennzeichnet, dass** die Empfänger/Dekoder-Einheit (STB) ein Verwaltungsmodul für die Zugriffsrechte (CA) enthält, das in der Lage ist, mit dem Entwürfelungs-Modul (DESCR) zusammenzuarbeiten, um die Entwürfelung des ersten und/oder des zweiten Signals zu aktivieren.

15. Anlage nach Anspruch 14, **dadurch gekennzeichnet, dass** der örtliche Server (SL) in der Lage ist, das Modul für die Verwaltung der Zugriffsrechte (CA) im Hinblick auf eine Steuerung der Rechte zu konsultieren, zu denen die Empfänger/Dekoder-Einheit (STB) Zugriff hat.

16. Anlage nach Anspruch 13, **dadurch gekennzeichnet, dass** die Empfänger/Dekoder-Einheit (STB) dafür vorgesehen ist, zu dem örtlichen Server (SL) eine Anforderung für Zugriffsrechte zu übertragen, während der örtliche Server (SL) dafür vorgesehen ist, die Anforderung für die Zugriffsrechte zu der ersten und/oder der zweiten Informationsquelle zu übertragen und um zu der Empfänger/Dekoder-Einheit (STB) Software-Anwendungen (APPL) zu übertragen, die die Entwürfelung des ersten und/oder des zweiten Signals als Antwort auf die Anforderung der Zugriffsrechte ermöglicht.

17. Empfänger/Dekoder-Einheit einer Anlage nach einem der vorangehenden Ansprüche.
